# EUROPEAN PATENT SPECIFICATION

(11) **EP 2 565 418 B1**
(45) Date of publication and mention of the grant of the patent: **05.03.2014**
(21) Application number: 11306085.9
(22) Date of filing: 30.08.2011
(51) Int. Cl.: F02C 6/12, F01D 25/16

(54) **Turbocharger bearing comprising a sleeve between the inner bearing ring and the shaft**
Turbolader mit Lagerhuelse zwischen inneren Lagerring und Welle
Turbocompresseur avec manchon de palier entre le bague intérieur du palier et l'arbre

(43) Date of publication of application: 06.03.2013
(73) Proprietor: Aktiebolaget SKF, 41 550 Göteborg (SE)
(72) Inventor: Viault, Samuel, 37360 SAINT-ANTOINE-DU-ROCHER (FR); Berruet, Nicolas, 37360 NEUILLE-PONT-PIERRE (FR); Corbett, Richard, 37230 FONDETTES (FR); Liverato, Yves-André, 37370 SAINT PATERNE RACAN (FR); Chambonneau, Charles, 37300 JOUE-LES-TOURS (FR); Ghilbert-Simon, Aurélien, 37390 SAINT ROCH (FR); Ribault, Patrice, 37210 VOUVRAY (FR)
(74) Representative: Dossmann, Gérard

(56) References cited:
- EP-A1- 1 273 857
- EP-A1- 2 011 967
- CN-Y- 201 351 511
- CN-Y- 201 396 194
- DE-A1- 10 238 415
- DE-A1-102008 056 059
- US-A- 2 910 005
- US-A- 4 482 303
- US-A1- 2005 013 696

## Description

The present invention relates to the field of turbochargers, and in particular those used in combustion engines for automotive vehicles.

In such application, a turbocharger is used to enhance the combustion engine performance by blowing compressed air into the cylinders of said engine.

A turbocharger generally comprises a housing, a shaft extending through an opening formed on the housing, a turbine wheel mounted on a first end portion of the shaft and located in an exhaust gases passage of the combustion engine, a compressor wheel mounted on an opposite second end portion of said shaft and located in an admission gases passage of the engine, and rolling bearings disposed between the shaft and the housing. When the turbine wheel is rotated by the flow of the exhaust gases, the shaft and the compressor wheel are rotated which leads to a compression of the admission gases introduced into the cylinders of the combustion engine.

However, in order to disassemble the rolling bearings from the shaft, an axial load is generally applied to the shaft, which may lead to indentations on the raceways of the rolling bearings. The damaged rolling bearings have thus to be replaced.

Replacing the rolling bearings after all disassembly procedures leads to an increase of the mounting cost.

One aim of the present invention is therefore to overcome the aforementioned drawbacks.

It is a particular object of the present invention to provide a turbocharger which is simple to manufacture and economic while guaranteeing a disassembly of the rolling bearings without damaging the rolling bearings or the shaft.

In one embodiment, the turbocharger comprises a shaft, a housing, a turbine wheel and a compressor wheel mounted onto the shaft, at least one rolling bearing located between the shaft and the housing and comprising an inner ring, an outer ring and at least one row of rolling elements between raceways provided on the rings.

The turbocharger comprises at least one intermediate sleeve radially located between the shaft and the inner ring of the rolling bearing.

The intermediate sleeve between the rolling bearing and the shaft allows the shaft to be disassembled without damaging the rolling bearing.

Advantageously, the intermediate sleeve comprises at least one end axially extending further than the radial lateral surface of the inner ring of the rolling bearing. The end of the sleeve, extending axially further than the radial lateral surface of the inner ring, further referenced as a "first end", allows the sleeve to cooperate with an external mounting tool. The prior art document EP 1273857 A1 discloses a turbine comprising an insulating sleeve made of ceramic material, located between the inner ring of a rolling bearing and the shaft. Further the insulating sleeve comprises in one embodiment a disk-shaped shoulder. However the sleeve does not provide for any means to cooperate with an external tool.

Preferably, the at least one end called "the first end" of the intermediate sleeve of the present invention is provided with at least one positioning means adapted to cooperate with an external tool, such as an extractor or a hub puller.

The positioning means may comprise at least one annular groove, at least one threaded portion, at least one radial hole or opening or a radial through-hole or through-opening, made through the thickness of the intermediate sleeve.

The intermediate sleeve may comprise at least one axial slot provided axially on all its axial length.

Preferably, the intermediate sleeve has a stepped bore adapted to cooperate with a stepped outer cylindrical surface of the shaft.

One end of the intermediate sleeve, opposite to the first end, may comprise a shoulder, for axially retaining the rolling bearing.

In one embodiment, the turbocharger comprises a second rolling bearing mounted radially between the intermediate sleeve and the housing and comprising an inner ring, an outer ring and at least one row of rolling elements between said rings.

In another embodiment, the intermediate sleeve comprises a first cylindrical portion in contact with the inner ring of the first rolling bearing, a second cylindrical portion having a diameter bigger than the diameter of the first cylindrical portion for retaining axially the first inner ring and a third cylindrical portion having a toroidal surface forming an inner ring of a second rolling bearing comprising an outer ring and at least one row of rolling elements between said second outer ring and said toroidal surface of the sleeve.

Advantageously, the intermediate sleeve has a stepped bore adapted to cooperate with a stepped outer cylindrical surface of the shaft.

Preferably, the first outer ring and the second outer ring form one unique outer ring.

The intermediate sleeve can be made of a metallic material, such as 100C6, DC03 or Aluminium alloy.

The present invention and its advantages will be better understood by studying the detailed description of specific embodiments given by way of non-limiting examples and illustrated by the appended drawings on which:
- Figure 1 is an axial section of a turbocharger according to a first embodiment of the invention;
- Figure 2 is an axial section of an intermediate sleeve of Figure 1 according to another example;
- Figure 3 is a perspective view of an intermediate sleeve of Figure 2 according to another example;
- Figures 4, 5a, 5b, 6a, 6b are axial sections of intermediate sleeves showing other examples of the positioning means;
- Figure 7 is an axial section of a turbocharger according to a second embodiment of the invention;
- Figure 8 is an axial section of a turbocharger according to a third embodiment of the invention;
- Figure 9 is a perspective view of an intermediate sleeve of Figure 8;
- Figures 10 and 11 illustrate other examples of the positioning means of Figure 8.

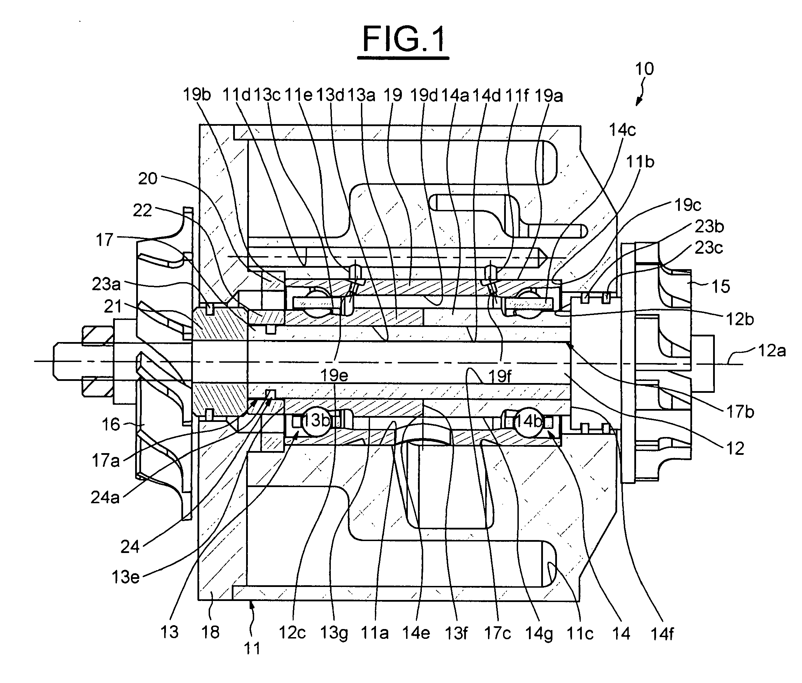

As illustrated on Figure 1, which illustrates an embodiment of a turbocharger 10 according to an example of the invention, the turbocharger 10 comprises a housing 11, a shaft 12 extending along an axial axis 12a through a cylindrical bore 11a or opening of the housing 11, two rolling bearings 13, 14 disposed into the bore 11a, a turbine wheel 15 fixed at one end of the shaft 12, a compressor wheel 16 fixed at an opposite end of said shaft 12, and an intermediate sleeve 17 radially located between the shaft 12 and the rolling bearings 13, 14. The turbocharger 10 also comprises a cap 18 fixed at an axial end of the housing 11.

Each rolling bearing 13, 14 comprises an inner ring 13a, 14a and an outer ring 19 between which is housed two rows of rolling elements 13b, 14b, which in this case are balls, two annular cages 13c, 14c maintaining the circumferential spacing of the rolling elements 13b, 14b. The axis of each rolling bearing 13, 14 is coaxial with the axis 12a of the shaft 12 of the turbocharger 10.

The inner rings 13a, 14a are concentric and symmetric with respect to a transverse radial plane passing through the centre of the outer ring 19. The rings 13a, 14a, 19 are of the solid type. A "solid ring" is to be understood as a ring obtained by machining with removal of material (by machining, grinding) from metal tube stock, bar stock, rough forgings and/or rolled blanks.

The outer ring 19, forming the outer ring of the first rolling bearing 13 and the outer ring of the second rolling bearing 14, comprises an outer cylindrical surface 19a delimited by opposite radial lateral surfaces 19b, 19c which respectively axially come into contact with the cap 18 and a radial shoulder 11b of the housing 11. As illustrated, a bushing 20 is mounted axially between the cap 18 and the radial lateral surface 19b of the outer ring 19, in order to compensate an axial clearance between the cap 18 and said radial lateral surface 19b. The outer ring 19 also comprises a bore 19d of cylindrical shape from which are formed toroidal raceways (not referenced) having in cross-section a concave internal profile adapted to the rolling elements 13b, 14b. The raceways are symmetrical with respect to the transverse radial plane passing through the centre of the outer ring 19.

In the disclosed embodiment, the inner rings 13a, 14a are identical, symmetrical with respect to the transverse radial plane of symmetry of the outer ring 19 and mounted axially fixedly one against the other. Alternatively, the two inner rings 13a, 14a may form one unique inner ring having two raceways. Each inner ring 13a, 14a has a bore 13d, 14d of cylindrical shape into which the intermediate sleeve 17 is mounted. Said bore 13d, 14d is delimited respectively by opposite radial lateral surfaces 13e, 13f; 14e, 14f. The radial lateral surface 13e of the inner ring 13a of the first rolling bearing 13 is coplanar with the lateral surface 19b of the outer ring 19 and axially bears against the compressor wheel 16 via a bushing 21 radially located the shaft 12 and the cap 18 and an annular spacer 22 mounted on the intermediate sleeve 17 axially between the inner ring 13a of the first rolling bearing 13 and the bushing 21. The radial surface 14f of the inner ring 14a of the second rolling bearing 14 axially bears against a radial shoulder 12b of the shaft 12. Each inner ring 13a, 14a also comprises an outer cylindrical surface 13g, 14g onto which first and second toroidal circular raceways (not referenced) are formed. The said raceways have in cross-section a concave internal profile adapted to the rolling elements 13b, 14d the said raceways being directed radially outwards. The raceways are symmetrical with respect to the transverse radial plane passing through the centre of the outer ring 19.

As shown on Figure 1, the turbocharger 10 is further provided with a sealing ring 23a mounted radially between the bushing 21 and the cap 18 and axially disposed between the compressor wheel 16 and the first rolling bearing 13, and with two sealing rings 23b, 23c disposed radially between the shoulder 12b of said shaft 12 and the bore 11a of housing 11 and axially mounted between the second rolling bearing 14 and the turbine wheel 15.

In the disclosed embodiment, the housing 11 comprises an axial cooling channel 11c extending from a radial end surface of said housing 11 against which the cap 18 is mounted. The cooling channel 11c extends axially further than the outer ring 19 of the rolling bearings 13, 14 and ends in the vicinity of a radial end surface of the housing 11 located on the turbine wheel 15 side. The cooling channel 11c is closed by the cap 18. The cooling channel 11c formed within the housing 11 is annular and radially surrounds the rolling bearings 13, 14. A cooling fluid (not shown), such as water, can be introduced into the cooling channel 11c.

The housing 11 further comprises an axial drilling 11d, acting as a lubricant reservoir, extending from a radial end surface of said housing 11 against which the cap 18 is mounted. The drilling 11d ends in the vicinity of a radial end surface of the housing 11 located on the turbine wheel 15 side. The drilling 11d formed within the housing 11 is annular and radially surrounds the rolling bearings 13, 14 and is provided with passages 11e, 11f made through the thickness of the housing 11. The passages 11e, 11f are adapted to cooperate respectively with a passage 19e, 19f made through the thickness of the outer ring 19 through which the lubricant contained in the drilling 11 d can flow by gravity towards the balls 13b and 14b.

As illustrated on Figure 1, the intermediate sleeve 17 is of tubular shape and comprises a first end 17a axially extending further than the radial lateral surface 13e of the inner ring 13a of the first rolling bearing 13 and a second end 17b having a radial lateral surface (not referenced) coplanar with the radial lateral surface 14f of the inner ring 14a of the second rolling bearing 14. The intermediate sleeve 17 comprises a bore 17c in contact with a cylindrical outer surface 12c of the shaft 12.

The first end 17a of the intermediate sleeve 17 is provided with a positioning means 24 adapted to cooperate with an external tool (not illustrated) used, for example in order to dissemble the shaft 12 from the intermediate sleeve 17. As illustrated on Figure 1, the positioning means 24 comprises an annular groove 24a provided on the outer cylindrical surface (not referenced) of the sleeve 17 located at the first end 17a. The intermediate sleeve 17 can be made of a metallic material, such as 100C6, DC03 or Aluminium alloy.

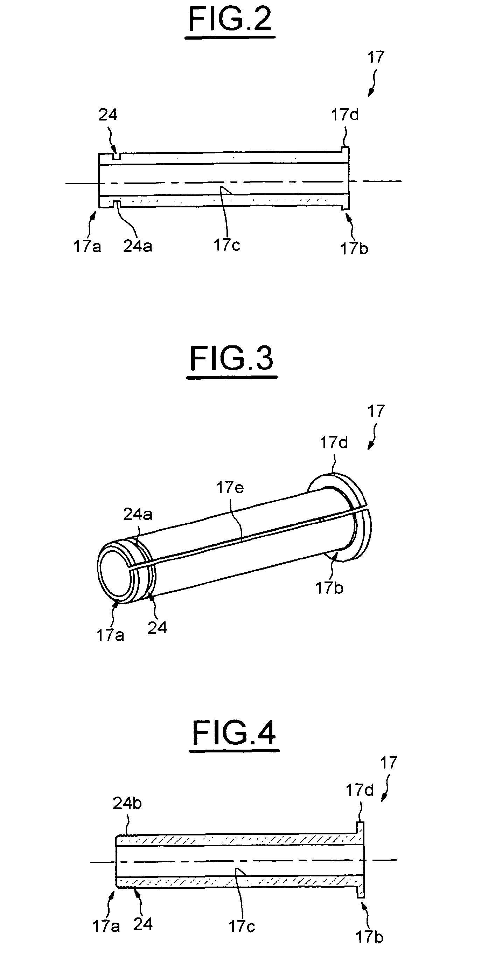

Figures 2 and 3 in which identical parts are given identical references, illustrates other examples of the intermediate sleeve 17 of Figure 1.

As illustrated on Figure 2, the first end 17a comprises a positioning means 24, such as an annular groove 24a and the second end 17b of the intermediate sleeve 17, opposite to the first end 17a, comprises a shoulder 17d, in order to axially retain the inner ring 14a of the second rolling bearing 14.

As shown in Figure 3, the intermediate sleeve 17 comprises at the first end 17a, a positioning means 24, such as an annular groove 24a and an axial slot 17e provided axially on all the axial length of the intermediate sleeve 17. In this embodiment, the intermediate sleeve 17 can be made, for example, of a metal sheet, stamped so as to form the axial slot 17e. The axial slot 17e allows the intermediate sleeve 17 to radially deform during a disassembly step, in order to disassemble the shaft 12 and the intermediate sleeve 17 easier.

Figures 4 to 6, in which identical parts are given identical references, illustrates other examples of the positioning means 24 of the intermediate sleeve 17 for an external tool.

The positioning means 24 of Figure 4 comprises a threaded portion 24b, adapted to cooperate with a threaded tool (not illustrated).

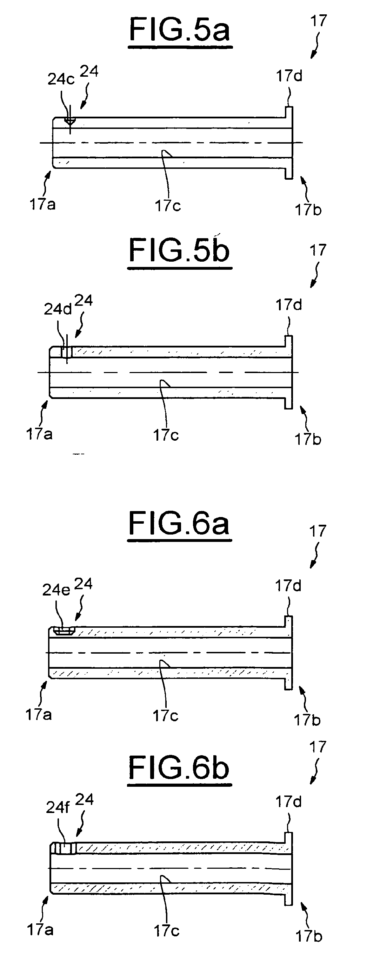

The positioning means 24 of Figures 5a and 5b comprise one radial hole 24c, or radial through-hole 24d made through the thickness of the intermediate sleeve 17. As an alternative, a plurality of holes 24c or through-holes 24d can be made radially on the first end 17a of the intermediate sleeve 17 and act as positioning means 24 for an external tool.

The positioning means 24 of Figures 6a and 6b comprise one radial opening 24e, of general oval shape, or radial through-opening 24f made through the thickness of the intermediate sleeve 17. The diameter of the hole 24c is smaller than the diameter of the opening 24e. As an alternative, a plurality of radial opening 24e or radial through-opening 24f can be made radially on the first end 17a of the intermediate sleeve 17 and act as positioning means 24 for an external tool.

In all examples illustrated on Figures 4 to 6, the second end 17b of the intermediate sleeve 17 is provided with a shoulder 17d. As an alternative, the second end 17b can be provided with no shoulder, as shown in the example of Figure 1.

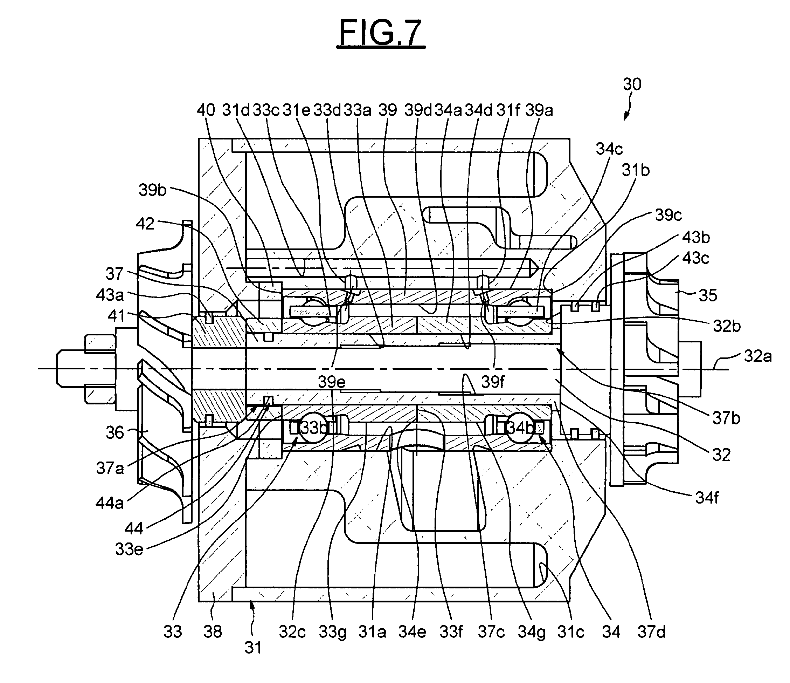

As illustrated on the Figure 7, which illustrates an embodiment of a turbocharger 30 according to an example of the invention, the turbocharger 30 comprises a housing 31, a shaft 32 extending along an axial axis 32a through a cylindrical bore 31a or opening of the housing 31, two rolling bearings 33, 34 disposed into the bore 31a of the housing, a turbine wheel 35 fixed at one end of the shaft 32, a compressor wheel 36 fixed at an opposite end of said shaft 32, and a intermediate sleeve 37 radially located between the shaft 32 and the rolling bearings 33, 34. The turbocharger also comprises a cap 38 fixed at an axial end of the housing 31.

Each rolling bearing 33, 34 comprises an inner ring 33a, 34a and an outer ring 39 between which is housed two rows of rolling elements 33b, 34b, which in this case are balls, two annular cages 33c, 34c maintaining the circumferential spacing of the rolling elements 33b, 34b. The axis of each rolling bearing 33, 34 is coaxial with the axis 32a of the shaft 32 of the turbocharger 30.

The inner rings 33a, 34a are concentric and symmetric with respect to a transverse radial plane passing through the centre of the outer ring 39. The rings 33a, 34a, 39 are of the solid type.

The outer ring 39, forming the outer ring of the first rolling bearing 33 and the outer ring of the second rolling bearing 34, comprises an outer cylindrical surface 39a delimited by opposite radial lateral surfaces 39b, 39c which respectively axially come into contact with the cap 38 and a radial shoulder 31b of the housing 31. As illustrated, a bushing 40 is mounted axially between the cap 38 and the radial lateral surface 39b of the outer ring 39, in order to compensate an axial clearance between the cap 38 and said radial lateral surface 39b. The outer ring 39 also comprises a bore 39d of cylindrical shape from which are formed toroidal raceways (not referenced) having in cross-section a concave internal profile adapted to the rolling elements 33b, 34b. The raceways are symmetrical with respect to the transverse radial plane passing through the centre of the outer ring 39.

In the disclosed embodiment, the inner rings 33a, 34a are identical, symmetrical with respect to the transverse radial plane of symmetry of the outer ring 39 and mounted axially fixedly one against the other. Alternatively, the two inner rings 33a, 34a may form one unique inner ring having two raceways. Each inner ring 33a, 34a has a bore 33d, 34d of cylindrical shape into which the intermediate sleeve 37 is mounted. Said bore 33d, 34d is delimited respectively by opposite radial lateral surfaces 33e, 33f; 34e, 34f. The radial lateral surface 33e of the inner ring 33a of the first rolling bearing 33 is coplanar with the lateral surface 39b of the outer ring 39 and axially bears against the compressor wheel 36 via a bushing 41 radially located the shaft 32 and the cap 18 and a spacer 42 mounted on the intermediate sleeve 37 axially between the inner ring 33a of the first rolling bearing 33 and the bushing 41. The radial surface 34f of the inner ring 34a of the second rolling bearing 34 axially bears against a radial shoulder 32b of the shaft 32. Each inner ring 33a, 34a also comprises an outer cylindrical surface 33g, 34g onto which first and second toroidal circular raceways (not referenced) are formed. The said raceways have in cross-section a concave internal profile adapted to the rolling elements 33b, 34d the said raceways being directed radially outwards. The raceways are symmetrical with respect to the transverse radial plane passing through the centre of the outer ring 39.

As shown on Figure 7, the turbocharger 30 is further provided with a sealing ring 43a mounted radially between the bushing 41 and the cap 38 and axially disposed between the compressor wheel 36 and the first rolling bearing 33, and with two sealing rings 43b, 43c disposed radially between the shoulder 32b of said shaft 32 and the bore 31a of housing 31 and axially mounted between the second rolling bearing 34 and the turbine wheel 35.

In the disclosed embodiment, the housing 31 comprises an axial cooling channel 31c extending from a radial end surface of said housing 31 against which the cap 38 is mounted. The cooling channel 31c extends axially further than the outer ring 39 of the rolling bearings 33, 34 and ends in the vicinity of a radial end surface of the housing 31 located on the turbine wheel 35 side. The cooling channel 31c is closed by the cap 38. The cooling channel 31c formed within the housing 31 is annular and radially surrounds the rolling bearings 33, 34 on its entire length. A cooling fluid (not shown), such as water, can be introduced into the cooling channel 31c.

The housing 31 further comprises an axial drilling 31d, acting as a lubricant reservoir, extending from a radial end surface of said housing 31 against which the cap 38 is mounted. The drilling 31d ends in the vicinity of a radial end surface of the housing 31 located on the turbine wheel 35 side. The drilling 31d formed within the housing 31 is annular and radially surrounds the rolling bearings 33, 34 and is provided with passages 31e, 31f made through the thickness of the housing 31. The passages 31e, 31f are adapted to cooperate respectively with a passage 39e, 39f made through the thickness of the outer ring 39 though which the lubricant contained in the drilling 31d can flow by gravity towards the balls 33b and 34b.

As illustrated on Figure 7, the intermediate sleeve 37 is of tubular shape and comprises a first end 37a axially extending further than the radial lateral surface 33e of the inner ring 33a of the first rolling bearing 33 and a second end 37b having a shoulder 37d, in order to axially retain the inner ring 34a of the second rolling bearing 34. The shoulder 37d is axially in contact with the lateral radial surface 34f of the inner ring 34a of the second rolling bearing 34 and with the shoulder 32b of the shaft 32. The intermediate sleeve 37 comprises a stepped bore 37c in contact with a stepped outer cylindrical outer surface 32c of the shaft 32. The intermediate sleeve 37 is thus in contact in three zones with the shaft 32, which allows to have a reduced surface dedicated to the centering function, which requires a high machining precision.

The first end 37a of the intermediate sleeve 37 is provided with a positioning means 44 adapted to cooperate with an external tool (not illustrated) used, for example in order to dissemble the shaft 32 from the intermediate sleeve 37. The positioning means 44 comprises an annular groove 44a on the first end 37a of the intermediate sleeve 37.

As an alternative, positioning means 44 can be provided with a threaded portion, a hole or through-hole or with an opening or through-opening.

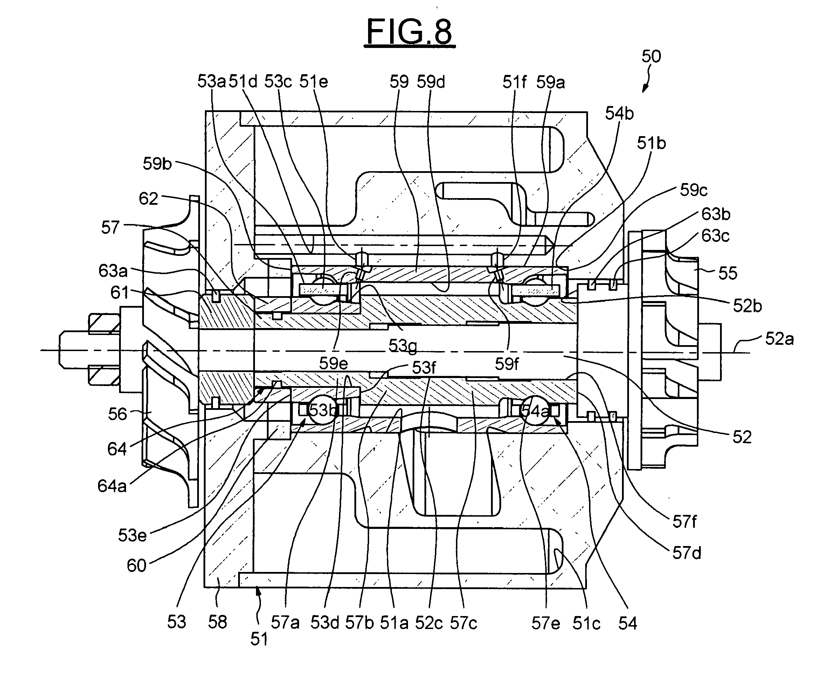

As illustrated on the Figure 8, which illustrates an embodiment of a turbocharger 50 according to an example of the invention, the turbocharger 50 comprises a housing 51, a shaft 52 extending along an axial axis 52a through a cylindrical bore 51a or opening of the housing 51, two rolling bearings 53, 54 disposed into the bore 51a of the housing, a turbine wheel 55 fixed at one end of the shaft 52, a compressor wheel 56 fixed at an opposite end of said shaft 52, and a intermediate sleeve 57 radially located between the shaft 52 and the rolling bearings 53, 54. The turbocharger 50 also comprises a cap 58 fixed at an axial end of the housing 51.

The first rolling bearing 53 comprises an inner ring 53a, an outer ring 59 between which is housed a row of rolling elements 53b, which in this case are balls, an annular cage 53c maintaining the circumferential spacing of the rolling elements 53b. The rings 53a, 59 are of the solid type.

The outer ring 59, forming the outer ring of the first rolling bearing 53 and the outer ring of the second rolling bearing 54, comprises an outer cylindrical surface 59a delimited by opposite radial lateral surfaces 59b, 59c which respectively axially come into contact with the cap 58 and a radial shoulder 51b of the housing 51. As illustrated, a bushing 60 is mounted axially between the cap 58 and the radial lateral surface 59b of the outer ring 59, in order to compensate an axial clearance between the cap 58 and said radial lateral surface 59b. The outer ring 59 also comprises a bore 59d of substantially cylindrical shape from which are formed toroidal raceways (not referenced) having in cross-section a concave internal profile adapted to the rolling elements 53b, 54a. The raceways are symmetrical with respect to the transverse radial plane passing through the centre of the outer ring 59.

The inner ring 53a has a bore 53d of cylindrical shape into which the intermediate sleeve 57 is mounted. Said bore 53d is delimited respectively by opposite radial lateral surfaces 53e, 53f. The radial lateral surface 53e of the inner ring 53a of the first rolling bearing 53 is coplanar with the lateral surface 59b of the outer ring 59 and axially bears against the compressor wheel 56 via a bushing 61 radially located the shaft 52 and the cap 58 and a spacer 62 mounted on the intermediate sleeve 57 axially between the inner ring 53a of the first rolling bearing 53 and the bushing 61. The inner ring 53a also comprises an outer cylindrical surface 53g onto which a first toroidal circular raceway (not referenced) is formed. The said raceway has in cross-section a concave internal profile adapted to the rolling elements 53b, the said raceway being directed radially outwards.

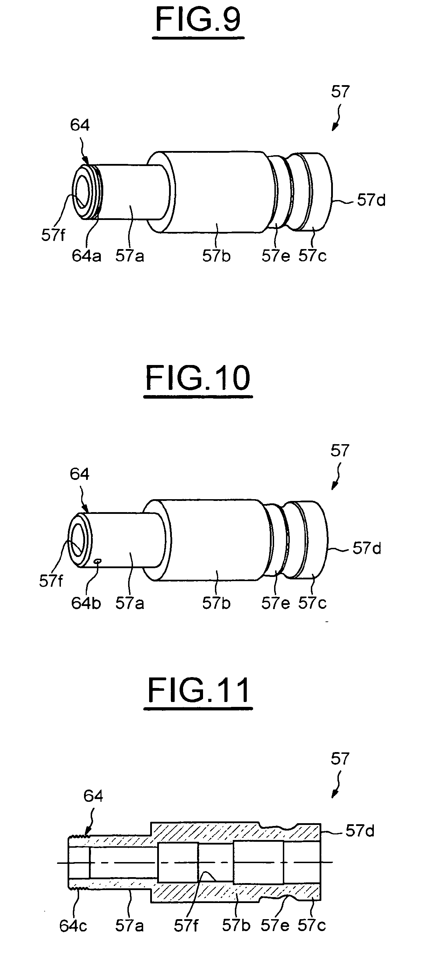

The intermediate sleeve 57, of tubular shape, illustrated in details in Figure 9, comprises a first cylindrical portion 57a in contact with the inner ring 53a of the first rolling bearing 53 and axially extending further from the radial lateral surface 53e of the inner ring 53a, a second cylindrical portion 57b, having a diameter bigger than the diameter of the first cylindrical portion 57a, for retaining axially the first inner ring 53a and a third cylindrical portion 57c forming the inner ring of the second rolling bearing 54.

The first cylindrical portion 57a, forming a first end of the intermediate sleeve 57, is radially in contact with the bore 53d of the inner ring 53a. The third portion 57c of the intermediate sleeve 57, forming a second end of the intermediate sleeve 57, comprises a radial lateral surface 57d which axially bears against a radial shoulder 52b of the shaft 52 and an outer cylindrical surface (not reference) of cylindrical shape from which are formed a toroidal raceway 57e having in cross-section a concave internal profile adapted to rolling elements 54a of the second rolling bearing 54.

The intermediate sleeve 57 comprises a stepped bore 57f in contact with a stepped outer cylindrical outer surface 52c of the shaft 52. The intermediate sleeve 57 is thus in contact in three zones with the shaft 52. As an alternative, the bore 57f of the intermediate sleeve 57 can be cylindrical in contact with a cylindrical outer surface of the shaft 52.

The second rolling bearing 54 comprises an outer ring 59, being the same outer ring as for the first rolling bearing 53, and a row of rolling elements 54a, which in this case are balls between the third portion 57c of the intermediate sleeve 57 and the outer ring 59, an annular cage 54b maintaining the circumferential spacing of the rolling elements 54a. The axis of each rolling bearing 53, 54 is coaxial with the axis 52a of the shaft 52 of the turbocharger 50.

The first end 57a of the intermediate sleeve 57 is provided with a positioning means 64 adapted to cooperate with an external tool (not illustrated) used, for example in order to dissemble the shaft 52 from the intermediate sleeve 57.

As shown on Figure 8, the turbocharger 50 is further provided with a sealing ring 63a mounted radially between the bushing 61 and the cap 58 and axially disposed between the compressor wheel 56 and the first rolling bearing 53, and with two sealing rings 63b, 63c disposed radially between the shoulder 52b of said shaft 52 and the bore 51a of housing 51 and axially mounted between the second rolling bearing 54 and the turbine wheel 55.

In the disclosed embodiment, the housing 51 comprises an axial cooling channel 51c extending from a radial end surface of said housing 51 against which the cap 58 is mounted. The cooling channel 51c extends axially further than the outer ring 59 of the rolling bearings 53, 54 and ends in the vicinity of a radial end surface of the housing 51 located on the turbine wheel 55 side. The cooling channel 51c is closed by the cap 58. The cooling channel 51c formed within the housing 51 is annular and radially surrounds the rolling bearings 53, 54 on its entire length. A cooling fluid (not shown), such as water, can be introduced into the cooling channel 51c.

The housing 51 further comprises an axial drilling 51d, acting as a lubricant reservoir, extending from a radial end surface of said housing 51 against which the cap 58 is mounted. The drilling 51d ends in the vicinity of a radial end surface of the housing 51 located on the turbine wheel 55 side. The drilling 51d formed within the housing 51 is annular and radially surrounds the rolling bearings 53, 54 and is provided with passages 51e,51f made through the thickness of the housing 51. The passages 51e,51 f are adapted to cooperate respectively with a passage 59e, 59f made through the thickness of the outer ring 59 though which the lubricant contained in the drilling 51 d can flow by gravity towards the balls 53b and 54b.

As illustrated in Figures 8 and 9, the positioning means 64 of the intermediate sleeve 57 comprises an annular groove 64a provided on the outer cylindrical surface (not referenced) of the first portion 57a.

Figures 10 and 11, in which identical parts are given identical references, illustrate other examples of the positioning means 64 of the intermediate sleeve 57 for an external tool.

The positioning means 64 of Figure 10 comprise one radial hole 64b. As an alternative the hole 64b can be made though the thickness of the intermediate sleeve 57, and a plurality of holes 64b or through-holes can be made radially on the first end 57a of the intermediate sleeve 57 and act as positioning means 64 for an external tool.

The positioning means 64 of Figure 11 comprises a threaded portion 64c.

It should be noted that the embodiments illustrated and described were given merely by way of non-limiting indicative examples and that modifications and variations are possible within the scope of the invention.

Thanks to the invention, the intermediate sleeve is easily disassembled from the shaft and the rolling bearings can be removed without being damaged during the disassembly procedure. Furthermore, positioning means located on an end of the intermediate sleeve extending axially further than the radial lateral surface of the first inner ring makes it possible to cooperate with an external tool.

The invention applies not only to turbocharger comprising an angular contact ball rolling bearing with a double rows of balls but also to turbocharger comprising other types of rolling bearing, for example rolling bearing having four points contact and/or with a single row of balls or with at least three rows of balls.

Finally, it has to be made clear that by a turbocharger it is also meant a waste heat recovery turbine, a turbocompound or a compressor.

## Claims

1. Turbocharger comprising a shaft (12, 32, 52), a housing (11, 31, 51), a turbine wheel (15, 35, 55) and a compressor wheel (16, 36, 56) mounted onto the shaft (12, 32, 52), at least one rolling bearing (13, 33, 53) located between the shaft (12, 32, 52) and the housing (11, 31, 51) and comprising an inner ring (13a, 33a, 53a), an outer ring (19, 39, 59) and at least one row of rolling elements (13b, 33b, 53b) between raceways provided on the rings (13a, 19, 33a, 39, 53a, 59), and comprising at least one intermediate sleeve (17, 37, 57) radially located between the shaft (12, 32, 52) and the inner ring (13a, 33a, 53a) of the rolling bearing (13, 33, 53), having at least one end (17a, 37a, 57a) axially extending further than a radial lateral surface (13e, 33e, 53e) of the inner ring (13a, 33a, 53a) of the rolling bearing (13, 33, 53), **characterized in that** at least one end (17a, 37a, 57a) of the intermediate sleeve (17, 37, 57) comprises at least one positioning means (24, 44, 64) adapted to cooperate with an external tool.

2. Turbocharger according to claim 1, in which the positioning means (24, 44, 64) comprises at least one annular groove (24a, 44a, 64a).

3. Turbocharger according to claim 1, in which the positioning means (24, 64) comprises at least one threaded portion (24b, 64c).

4. Turbocharger according to claim 1, in which the positioning means (24, 64) comprises at least one radial hole (24c, 64b) or opening (24e).

5. Turbocharger according to claim 1, in which the positioning means (24) comprises at least one radial through-hole (24d) or through-opening (24f), made through the thickness of the intermediate sleeve (17).

6. Turbocharger according to any of claims 1 to 2, in which the intermediate sleeve (17) comprises at least one axial slot (17e) provided axially on all the axial length of the intermediate sleeve (17).

7. Turbocharger according to any of the preceding claims, in which the intermediate sleeve (37) has a stepped bore (37c) adapted to cooperate with a stepped outer cylindrical surface (32c) of the shaft (32).

8. Turbocharger according to any of the preceding claims, in which one end (17b, 37b) of the intermediate sleeve (17, 37) comprises a shoulder (17d, 37d).

9. Turbocharger according to any of the preceding claims, comprising a second rolling bearing (14, 34) mounted radially between the intermediate sleeve (17, 37) and the housing (11, 31) and comprising an inner ring (14a, 34a), an outer ring (19, 39) and at least one row of rolling elements (14b, 34b) between said rings (14a, 19; 34a, 39).

10. Turbocharger according to any of claims 1 to 9, in which the intermediate sleeve (57) comprises a first cylindrical portion (57a) in contact with the inner ring (53a) of the first rolling bearing (53), a second cylindrical portion (57b) having a diameter bigger than the diameter of the first cylindrical portion (57a) and a third cylindrical portion (57c) having a toroidal surface (57e) and forming an inner ring of a second rolling bearing (54) comprising an outer ring (59) and at least one row of rolling elements (54a) between said second outer ring (59) and said toroidal surface (57e) of the sleeve (57).

11. Turbocharger according to claim 10, in which the intermediate sleeve (57) has a stepped bore (57f) adapted to cooperate with a stepped outer cylindrical surface (52c) of the shaft (52).

12. Turbocharger according to any one of claims 9 to 11, in which the first outer ring and the second outer ring form one unique outer ring (19,39,59).

13. Turbocharger according to any one of the preceding claims, in which the intermediate sleeve (17, 37, 57) is made of a metallic material.

## Patentansprüche

1. Turbolader, aufweisend eine Welle (12, 32, 52), ein Gehäuse (11, 31, 51), ein Turbinenrad (15, 35, 55) und ein Verdichterrad (16, 36, 56), das auf der Welle (12, 32, 52) montiert ist, mindestens ein Wälzlager (13, 33, 53), angeordnet zwischen der Welle (12, 32, 52) und dem Gehäuse (11, 31, 51) und aufweisend einen Innenring (13a, 33a, 53a), einen Außenring (19, 39, 59) und mindestens eine Reihe von Wälzkörpern (13b, 33b, 53b), zwischen auf den Ringen (13a, 19, 33a, 39, 53a, 59) bereitgestellten Laufbahnen und aufweisend mindestens eine radial zwischen der Welle (12, 32, 52) und dem Innenring (13a, 33a, 53a) des Wälzlagers (13, 33, 53) angeordnete Zwischenhülse (17, 37, 57), die mindestens ein Ende (17a, 37a, 57a) aufweist und die sich weiter als eine radiale Seitenfläche (13e, 33e, 53e) des Innenrings (13a, 33a, 53a) des Wälzlagers (13, 33, 53) erstreckt, **dadurch gekennzeichnet, dass** mindestens ein Ende (17a, 37a, 57a) der Zwischenhülse (17, 37, 57) mindestens ein Positionierungsmittel (24, 44, 64) aufweist, dass an ein Zusammenwirken mit einem äußeren Werkzeug angepasst ist.

2. Turbolader nach Anspruch 1, wobei das Positionierungsmittel (24, 44, 64) mindestens eine ringförmige Nut (24a, 44a, 64a) aufweist.

3. Turbolader nach Anspruch 1, wobei das Positionierungsmittel (24, 64) mindestens einen mit Gewinde versehenen Teil (24b, 64c) aufweist.

4. Turbolader nach Anspruch 1, wobei das Positionierungsmittel (24, 64) mindestens ein radiales Loch (24c, 64b) oder eine radiale Öffnung (24e) aufweist.

5. Turbolader nach Anspruch 1, wobei das Positionierungsmittel (24) mindestens ein radiales Durchgangsloch (24d) oder eine radiale Durchgangsöffnung (24f) aufweist, die durch die Dicke der Zwischenhülse (17) angeordnet ist.

6. Turbolader nach einem der Ansprüche 1 bis 2, wobei die Zwischenhülse (17) mindestens einen axialen Schlitz (17e) aufweist, der axial über die gesamte axiale Länge der Zwischenhülse (17) bereitgestellt ist.

7. Turbolader nach einem der vorhergehenden Ansprüche, wobei die Zwischenhülse (37) eine abgestufte Bohrung (37c) aufweist, die an ein Zusammenwirken mit einer abgestuften äußeren zylindrischen Fläche (32c) der Welle (32) angepasst ist.

8. Turbolader nach einem der vorhergehenden Ansprüche, wobei ein Ende (17b, 37b) der Zwischenhülse (17, 37) eine Schulter (17d, 37d) aufweist.

9. Turbolader nach einem der vorhergehenden Ansprüche, aufweisend ein zweites Wälzlager (14, 34), das radial zwischen der Zwischenhülse (17, 37) und dem Gehäuse (11, 31) montiert ist und einen Innenring (14a, 34a), einen Außenring (19, 39) und mindestens eine Reihe von Wälzkörpern (14b, 34b) zwischen den Ringen (14a, 19; 34a, 39) aufweist.

10. Turbolader nach einem der Ansprüche 1 bis 9, wobei die Zwischenhülse (57) einen ersten zylindrischen Teil (57a) in Kontakt mit dem Innenring (53a) des ersten Wälzlagers (53), einen zweiten zylindrischen Teil (57b) mit einem größeren Durchmesser als der Durchmesser des ersten zylindrischen Teils (57a) und einen dritten zylindrischen Teil (57c) aufweist, welcher eine toroidale Fläche (57e) aufweist und einen Innenring eines zweiten Wälzlagers (54) bildet, das einen Außenring (59) und mindestens eine Reihe von Wälzkörpern (54a) zwischen dem zweiten Außenring (59) und der toroidalen Fläche (57e) der Hülse (57) aufweist.

11. Turbolader nach Anspruch 10, wobei die Zwischenhülse (57) eine abgestufte Bohrung (57f) aufweist, die an ein Zusammenwirken mit einer abgestuften äußeren zylindrischen Fläche (52c) der Welle (52) angepasst ist.

12. Turbolader nach einem der Ansprüche 9 bis 11, wobei der erste Außenring und der zweite Außenring einen einzigen Außenring (19, 39, 59) bilden.

13. Turbolader nach einem der vorhergehenden Ansprüche, wobei die Zwischenhülse (17, 37, 57) aus einem metallischen Werkstoff hergestellt ist.

## Revendications

1. Turbocompresseur comprenant un arbre (12, 32, 52), un carter (11, 31, 51), une roue de turbine (15, 35, 55) et une roue de compresseur (16, 36, 56) montée sur l'arbre (12, 32, 52), au moins un palier à roulement (13, 33, 53) disposé entre l'arbre (12, 32, 52) et le carter (11, 31, 51) et comprenant une bague intérieure (13a, 33a, 53a), une bague extérieure (19, 39, 59) et au moins une rangée d'éléments roulants (13b, 33b, 53b) entre des chemins de roulement formés sur les bagues (13a, 19, 33a, 39, 53a, 59), et comprenant au moins un manchon intermédiaire (17, 37, 57) positionné radialement entre l'arbre (12, 32, 52) et la bague intérieure (13a, 33a, 53a) du palier à roulement (13, 33, 53), ayant au moins une extrémité (17a, 37a, 57a) s'étendant axialement au-delà d'une surface latérale radiale (13e, 33e, 53e) de la bague intérieure (13a, 33a, 53a) du palier à roulement (13, 33, 53), **caractérisé en ce qu'**au moins une extrémité (17a, 37a, 57a) du manchon intermédiaire (17, 37, 57) comprend au moins un moyen de positionnement (24, 44, 64) adapté pour coopérer avec un outil extérieur.

2. Turbocompresseur selon la revendication 1, dans lequel le moyen de positionnement (24, 44, 64) comprend au moins une rainure annulaire (24a, 44a, 64a).

3. Turbocompresseur selon la revendication 1, dans lequel le moyen de positionnement (24, 64) comprend au moins une portion filetée (24b, 64c).

4. Turbocompresseur selon la revendication 1, dans lequel le moyen de positionnement (24, 64) comprend au moins un trou (24c, 64b) ou une ouverture (24e) radial(e).

5. Turbocompresseur selon la revendication 1, dans lequel le moyen de positionnement (24) comprend au moins un trou traversant (24d) ou une ouverture traversante (24f) radial(e), pratiqué(e) dans l'épaisseur du manchon intermédiaire (17).

6. Turbocompresseur selon l'une quelconque des revendications 1 à 2, dans lequel le manchon intermédiaire (17) comprend au moins une fente axiale (17e) formée axialement sur toute la longueur axiale du manchon intermédiaire (17).

7. Turbocompresseur selon l'une quelconque des revendications précédentes, dans lequel le manchon intermédiaire (37) comporte un alésage épaulé (37c) adapté pour coopérer avec une surface cylindrique extérieure épaulée (32c) de l'arbre (32).

8. Turbocompresseur selon l'une quelconque des revendications précédentes, dans lequel une extrémité (17b, 37b) du manchon intermédiaire (17, 37) comprend un épaulement (17d, 37d).

9. Turbocompresseur selon l'une quelconque des revendications précédentes, comprenant un deuxième palier à roulement (14, 34) monté radialement entre le manchon intermédiaire (17, 37) et le carter (11, 31) et comprenant une bague intérieure (14a, 34a), une bague extérieure (19, 39) et au moins une rangée d'éléments roulants (14b, 34b) entre lesdites bagues (14a, 19 ; 34a, 39).

10. Turbocompresseur selon l'une quelconque des revendications 1 à 9, dans lequel le manchon intermédiaire (57) comprend une première partie cylindrique (57a) en contact avec la bague intérieure (53a) du premier palier à roulement (53), une deuxième partie cylindrique (57b) ayant un diamètre supérieur à celui de la première partie cylindrique (57a) et une troisième partie cylindrique (57c) ayant une surface toroïdale (57e) et formant une bague intérieure d'un deuxième palier à roulement (54) comprenant une bague extérieure (59) et au moins une rangée d'éléments roulants (54a) entre ladite deuxième bague extérieure (59) et ladite surface toroïdale (57e) du manchon (57).

11. Turbocompresseur selon la revendication 10, dans lequel le manchon intermédiaire (57) comporte un alésage épaulé (57f) adapté pour coopérer avec une surface cylindrique extérieure épaulée (52c) de l'arbre (52).

12. Turbocompresseur selon l'une quelconque des revendications 9 à 11, dans lequel la première bague extérieure et la deuxième bague extérieure forment une unique bague extérieure (19, 39, 59).

13. Turbocompresseur selon l'une quelconque des revendications précédentes, dans lequel le manchon intermédiaire (17, 37, 57) est réalisé en matériau métallique.
